# EUROPEAN PATENT APPLICATION

(11) **EP 4 572 399 A1**
(43) Date of publication of application: **18.06.2025**
(21) Application number: 22954271.7
(22) Date of filing: 08.08.2022
(51) Int. Cl.: H04W 36/00

(54) **CELL CHANGE METHOD AND APPARATUS**

(71) Applicant: FUJITSU LIMITED, Kawasaki-shi, Kanagawa 211-8588 (JP)
(72) Inventor: JIA, Meiyi, Beijing 100022 (CN); LU, Yang, Beijing 100022 (CN); WANG, Xin, Beijing 100022 (CN)
(74) Representative: Haseltine Lake Kempner LLP
(86) International application number: PCT/CN2022/110978
(87) International publication number: WO 2024/031291

(57) **Abstract**

Embodiments of this disclosure provide a method and apparatus for a cell switching. The method includes: transmitting a measurement result by a terminal equipment to a first network node; receiving L1 signaling and/or L2 signaling by the terminal equipment from the first network node; and changing by the terminal equipment from a serving cell to a cell indicated by L2 signaling and/or L1 signaling.

## Description

### Technical Field

This disclosure relates to the field of communication technologies.

### Background

Network controlled mobility is applicable to terminals in a connected state and may be divided into two types: cell-level mobility and beam-level mobility.

The cell-level mobility requires explicit RRC signaling to be triggered, i.e. handover. The handover mechanism triggered by RRC requires a terminal (UE) to at least reset an MAC entity and re-establish RLC. RRC managed handovers without and without packet data convergence protocol (PDCP) entity re-establishment are both supported. For data radio bearers (DRBs) using an RLC AM mode, the PDCP may either be re-established together with a secure key change or initiate a data recovery procedure without a key change. For DRBs using an RLC UM mode, the PDCP can either be re-established together with a security key change or remain as it is without a key change. For signaling radio bearers (SRBs), the PDCP may either remain as it is, discard its stored PDCP PDUs/SDUs without a key change, or be re-established together with a security key change.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary of

When a terminal moves from a coverage area of a cell to a coverage area of another cell, a serving cell change (switch) needs to be performed at a certain point. Currently, the change of the serving cell is triggered by L3 measurement and completed by RRC signaling, and reconfiguration with synchronization triggered for changing a primary cell (PCell) and a primary secondary cell (PSCell) and release of secondary cells (SCells) (if applicable) are increased.

Inter-cell mobility may include intra-gNB-DU mobility, inter-gNB-DU mobility within a gNB-CU, and inter-gNB-CU mobility.

An intra-gNB-DU mobility procedure is used for a case where a terminal moves from one cell to another cell within the same gNB-DU or used for a case of execution of intra-cell handover. This procedure is supported by a UE Context Modification (initiated by the gNB-CU) procedure.

When intra-gNB-DU (inter-cell or intra-cell) handover is performed, the gNB-CU provides channel UL GTP TEID to the gNB-DU, and the gNB-DU provides new DL GTP TEID to the gNB-CU. Until RLC is re-established, the gNB-DU will continue to use the previous UL GTP TEID to transmit UL PDCP PDUs to the gNB-CU, and then transmit by using the new UL GTP TEID. Until PDCP re-establishment or PDCP data recovery is performed, the gNB-CU will continue to use the previous DL GTP TEID to transmit DL PDCP PDUs to the gNB-DU, and then transmit by using the new DL GTP TEID.

The intra-gNB-DU mobility procedure within the gNB-CU is used for a case where a terminal moves from a gNB-DU to another gNB-DU within the same gNB-CU.

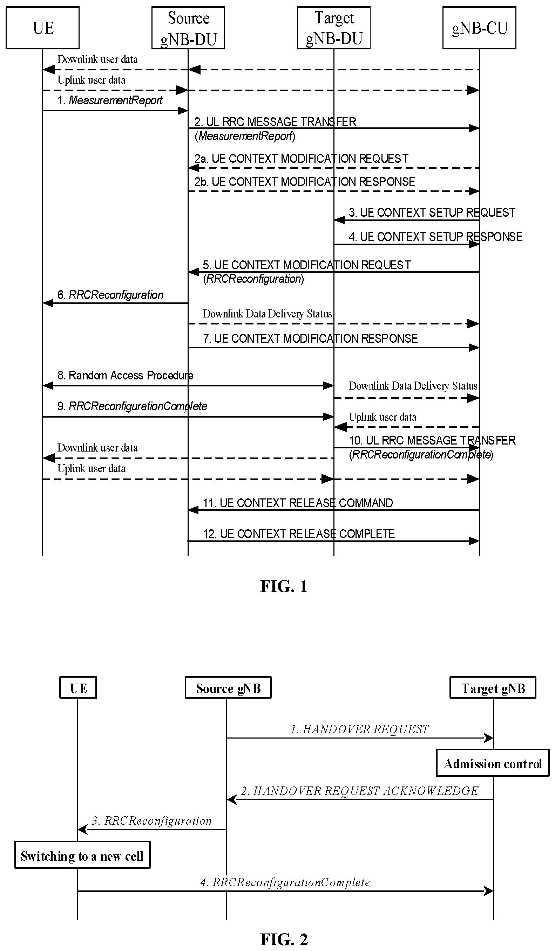

FIG. 1 is a schematic diagram of the intra-gNB-DU mobility procedure within the gNB-CU. As shown in FIG. 1, the procedure includes:
1. the UE transmits an MeasurementReport message to a source gNB-DU;
2. the source gNB-DU transmits a UL RRC MESSAGE TRANSFER message to the gNB-CU to convey the received MeasurementReport message;
   2a. the gNB-CU transmits a UE CONTEXT MODIFICATION REQUEST message to the source gNB-DU to query latest configuration;
   2b. the source gNB-DU responds with a UE CONTEXT MODIFICATION RESPONSE message containing full configuration information;
3. the gNB-CU transmits a UE CONTEXT SETUP REQUEST message to the target gNB-DU to create a UE context and setup one or more data bearers, wherein the UE CONTEXT SETUP REQUEST message includes a HandoverPreparationInformation, and in a case of NG-RAN sharing, the gNB-CU includes a serving PLMN ID (for SNPNs, including a serving SNPN ID);
4. the target gNB-DU makes responds to the gNB-CU with a UE CONTEXT SETUP RESPONSE message;
5. the gNB-CU transmits a UE CONTEXT MODIFICATION REQUEST message to the source gNB-DU, wherein the message includes a generated RRCReconfiguration message and indicates to stop data transmission for the UE, and the source gNB-DU also transmits a downlink data transmission status frame to inform the gNB-CU about the successfully transmitted downlink data to the UE;
   Note: in case of DAPS handover, the UE CONTEXT MODIFICATION REQUEST message in step 5 may indicate to stop the data transmission only for the DRB(s) not subject to DAPS handover or may not indicate to stop the data transmission at all. Instead, a DL RRC message transmission procedure may be used to carry a handover command to the UE. Once the gNB-CU knows that the UE has successfully accessed to the target gNB-DU, the UE CONTEXT MODIFICATION REQUEST message indicating to stop the data transmission for the UE is sent to the source gNB-DU, for which, the source gNB-DU transmits a DDDS frame about unsuccessfully transmitted downlink data to the gNB-CU;
6. the source gNB-DU forwards the received RRCReconfiguration message to the UE;
7. the source gNB-DU responds to the gNB-CU with a UE CONTEXT MODIFICATION RESPONSE message;
8. a random access procedure is performed in the target gNB-DU, wherein the target gNB-DU transmits a downlink data transmission status frame to inform the gNB-CU, and downlink data packets that may include PDCP PDUs not successfully transmitted in the source gNB-DU are transmitted from the gNB-CU to the target gNB-DU;
   Note: it is up to gNB-CU implementation whether to start transmitting DL user data to the gNB-DU before or after receiving the downlink data transmission status;
9. the UE responds to the target gNB-DU with an RRCReconfigurationComplete message;
10. the target gNB-DU transmits a UL RRC MESSAGE TRANSFER message to the gNB-CU to convey the received RRCReconfigurationComplete message, wherein the downlink data packets are transmitted to the UE. Also, uplink data packets are transmitted from the UE and forwarded to the gNB-CU via the target gNB-DU;
11. the gNB-CU transmits a UE CONTEXT RELEASE COMMAND message to the source gNB-DU;
12. the source gNB-DU releases the UE context, and responds to the gNB-CU with a UE CONTEXT RELEASE COMPLETE message.

FIG. 2 is a schematic diagram of the inter-gNB-CU mobility procedure. As shown in FIG. 2, the signaling procedure includes:
1. the source gNB initiates handover and transmits a HANDOVER REQUEST over an Xn interface;
2. the target gNB performs admission control and provides new RRC configuration as a part of HANDOVER REQUEST ACKNOWLEDGE;
3. the source gNB provides RRC configuration to the UE by forwarding the RRCReconfiguration message received in HANDOVER REQUEST ACKNOWLEDGE, wherein the RRCReconfiguration message includes at least cell ID and all information required to access the target cell, so that the UE can access the target cell without reading system information, and access information to the target cell may include beam-specific information;
4. the UE moves RRC connection to the target gNB and replies with RRCReconfigurationComplete.

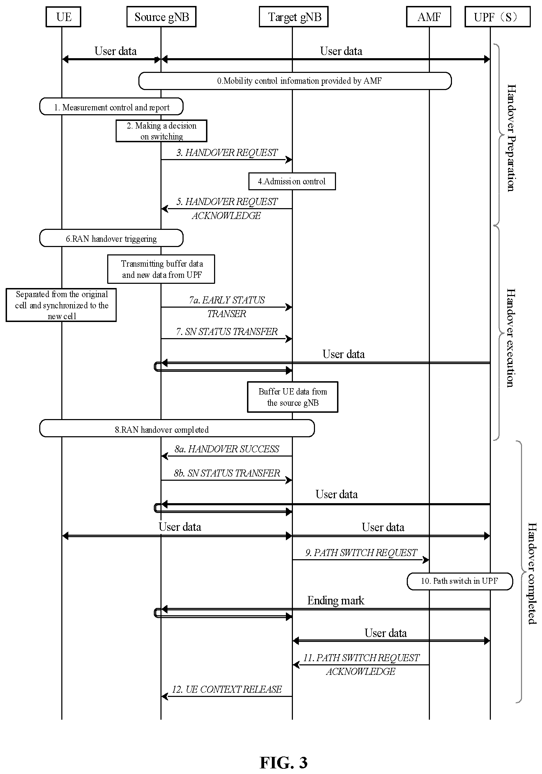

FIG. 3 is a schematic diagram of an intra-AMF/UPF handover procedure. As shown in FIG. 3, the procedure includes:
0: the UE context within the source gNB contains information regarding roaming and access restrictions, the information being provided at connection establishment or at the last TA update;
1. the source gNB configures UE measurement procedures, and the UE reports according to measurement configuration;
2. the source gNB decides to handover the UE according to MeasurementReport and RRM information;
3. the source gNB transmits a handover request message to the target gNB, passing a transparent RRC container with necessary information to prepare for handover at a target side, wherein the information include at least a target cell ID, KgNB*, a C-RNTI of the UE in the source gNB, RRM-configuration including UE inactivity time, basic AS-configuration including antenna information and a DL carrier frequency, current QoS flow to DRB mapping rules applied to the UE, SIB1 information from the source gNB, UE capabilities for different RATs, and PDU session related information, and can include the UE reported measurement information, including beam-related information (if available), the PDU session related information including slice information and QoS flow level QoS profile(s), and the source gNB may also request a DAPS handover for one or more DRBs;
Note 1: after the handover request is transmitted, the source gNB should not reconfigure the UE, including performing reflective QoS flow to DRB mapping;
4. Admission Control may be performed by the target gNB. If the slice information is transmitted to the target gNB, slice aware admission control should be performed. If PDU sessions are associated with non-supported slices, the target gNB should reject such PDU sessions;
5. the target gNB prepares for handover with L1/L2 and transmits HANDOVER REQUEST ACKNOWLEDGE to the source gNB, including a transparent container to be transmitted as an RRC message to the UE to perform the handover, and the target gNB also indicates if a DAPS handover is accepted;
Note 2: As soon as the source gNB receives HANDOVER REQUEST ACKNOWLEDGE, or as soon as the transmission of a handover command is initiated in a downlink, data forwarding may be initiated;
Note 3: for DRBs configured with DAPS, the downlink PDCP SDUs are forwarded with SN assigned by the source gNB, until SN assignment is handed over to the target gNB in step 8b, and normal data forwarding follows as defined in 9.2.3.2.3;
6. the source gNB triggers Uu handover by transmitting an RRCReconfiguration message to the UE, which includes information required to access to the target cell: at least a target cell ID, a new C-RNTI, and target gNB security algorithm identifiers for selected security algorithms, and it may also include a set of dedicated RACH resources, associations between RACH resources and SSB(s), associations between RACH resources and UE-specific CSI-RS configuration(s), common RACH resources and system information of the target cell, etc.;
Note 4: for DRBs configured with DAPS, the source gNB does not stop transmitting downlink packets until it receives a HANDOVER SUCCESS message from the target gNB in step 8a;
Note 4a: CHO cannot be configured simultaneously with DAPS handover;
7a. for DRBs configured with DAPS, the source gNB transmits an EARLY STATUS TRANSFER message. A DL COUNT value conveyed in the EARLY STATUS TRANSFER message indicates a PDCP SN and HFN of a first PDCP SDU forwarded by the source gNB to the target gNB. The source gNB does not stop assigning SNs to downlink PDCP SDUs, until it transmits the SN STATUS TRANSFER message to the target gNB in step 8b;
7. for DRBs not configured with DAPS, the source gNB transmits an SN Status Transfer message to the target gNB to convey an uplink PDCP SN receiver status and downlink PDCP SN transmitter status of DRBs for which a PDCP status preservation applies (i.e. for RLC AM), wherein the uplink PDCP SN receiver status includes at least a PDCP SN of a first missing UL PDCP SDU, and may further include a bit map of a receive status of out of sequence UL PDCP SDUs that the UE needs to retransmit in the target cell, if any; and the downlink PDCP SN transmitter status indicates a next PDCP SN that the target gNB should assign to new PDCP SDUs, not having a PDCP SN yet;
Note 5: in the case of DAPS handover, an uplink PDCP SN receiver status and downlink PDCP SN transmitter status of a DRB with RLC-AM and not configured with DAPS may be transferred via the SN STATUS TRANSFER message in step 8b instead of step 7;
Note 6: for DRBs configured with DAPS, the source gNB may additionally transmit an EARLY STATUS TRANSFER message between step 7 and step 8b to inform discarding already forwarded PDCP SDUs. The target gNB does not transmit forwarded downlink PDCP SDUs to the UE, whose COUNT is less than a transmitted DL COUNT value and discards them if transmission has not been attempted yet;
8. the UE synchronizes to the target cell and completes the RRC handover procedure by transmitting an RRCReconfigurationComplete message to the target gNB. In the case of DAPS handover, the UE does not detach from the source cell upon receiving the RRCReconfiguration message. The UE releases source resources and configurations, and stops DL/UL reception/transmission with the source upon receiving an explicit release from the target node;
Note 6a: from the perspective of RAN, the DAPS handover is considered to only be completed after the UE has released the source cell as explicitly requested from the target node. RRC suspend, a subsequent handover or inter-RAT handover cannot be initiated until the source cell has been released;
8a/b. in the case of DAP handover, the target gNB transmits a HANDOVER SUCCESS message to the source gNB to inform that the UE has successfully accessed the target cell. As a response, the source gNB transmits an SN STATUS TRANSFER messages to DRBs configured with DAPS for which the description in step 7 applies, and then normal data forwarding follows as defined in 9.2.3.2.3;
Note 7: if DAPS is configured, the uplink PDCP SN receiver status and downlink PDCP SN transmitter status will also be conveyed for DRBs with RLC-UM in the SN STATUS TRANSFER message in step 8b;
Note 8: for DRBs configured with DAPS, the source gNB does not stop delivering uplink QoS flows to UPF until it transmits the SN STATUS TRANSFER message in step 8b. Before receiving the SN STATUS TRANSFER message, the target gNB does not forward QoS flows of the uplink PDCP SDUs successfully received in sequence to the UPF, in which UL HFN and a first missing SN in the uplink PDCP SN receiver status indicates the start of the uplink PDCP SDUs to be delivered to the UPF. The target gNB does not deliver any uplink PDCP SDUs which has an UL COUNT lower than the provided;
Note 9: invalid;
9. the target gNB transmits a PATH SWITCH REQUEST message to AMF to trigger a 5GC to switch the DL data path towards the target gNB and to establish an NG-C interface instance towards the target gNB;
10. the 5GC switches the DL data path towards the target gNB. UPF transmits one or more 'end marker' packets to the source gNB on an old path per PDU session/tunnel, and then may release any U-plane/TNL resources to the source gNB;
11. the AMF confirms the PATH SWITCH REQUEST message with a PATH SWITCH REQUEST ACKNOWLEDGE message;
12. after receiving the PATH SWITCH REQUEST ACKNOWLEDGE message from the AMF, the target gNB transmits UE CONTEXT RELEASE to inform the source gNB about the success of the handover. Then, the source gNB may release radio and C-plane related resources associated to the UE context. Any ongoing data forwarding may continue.

The processes of inter-cell mobility, i.e. cell change, in various scenarios, are described above.

It was found by the inventors that when a terminal moves from a coverage area of a cell to a coverage area of another cell, serving cell change needs to be performed at a certain point. Currently, in various scenarios, serving cell change is triggered by L3 measurement and completed by RRC signaling, involving complete L1 (and L2) resetting, thereby resulting in longer latency, higher signaling overhead, and longer interruption times than beam switching mobility.

In order to solve at least one of the above problems, embodiments of this disclosure provide a method and apparatus for a cell switching.

According to a first aspect of the embodiments of this disclosure, there is provided a cell switch apparatus, provided in a terminal equipment, the apparatus including: a transmitter configured to transmit measurement result(s) to a first network node; a receiver configured to receive a MAC (Media Access Control) CE (Control Element) including cell information, TCI (Transmission Configuration Indicator) state ID(s) and TA (Timing Advance) information from the first network node; and a processor configured to switch a serving cell to a cell indicated by the MAC CE.

According to a second aspect of the embodiments of this disclosure, there is provided a cell switch apparatus, applicable to a first network node, the apparatus comprising: a receiver configured to receive measurement result(s) from a terminal equipment; and a transmitter configured to transmit a MAC CE including cell information, TCI state ID(s) and TA information to the terminal equipment to indicate the terminal equipment to switch a serving cell to a cell indicated by the MAC CEfor a cell switching.

According to a third aspect of the embodiments of this disclosure, there is provided a terminal equipment, including the apparatus as described in the first aspect of the embodiments of this disclosure.

According to a fourth aspect of the embodiments of this disclosure, there is provided a network node, including the apparatus as described in the second aspect of the embodiments of this disclosure.

According to a fifth aspect of the embodiments of this disclosure, there is provided a communication system, including the terminal equipment as described in the third aspect of the embodiments of this disclosure and/or the network node as described in the fourth aspect of the embodiments of this disclosure.

According to a sixth aspect of the embodiments of this disclosure, there is provided a method for a cell switching, applicable to a terminal equipment, the method including: transmitting a measurement result to a first network node; receiving L1 signaling and/or L2 signaling from the first network node; and changing from a serving cell to a cell indicated by the L2 signaling and/or the L1 signaling.

According to a seven aspect of the embodiments of this disclosure, there is provided a method for a cell switching, applicable to a first network node, the method including: receiving a measurement result from a terminal equipment; transmitting L1 signaling and/or L2 signaling to the terminal equipment to indicate the terminal equipment to change from a serving cell to a cell indicated by the L2 signaling and/or the L1 signaling.

According to an eighth aspect of the embodiments of this disclosure, there is provided a computer readable program code, which, when executed in an apparatus for a cell switching or a terminal equipment, will cause the apparatus for a cell switching or the terminal equipment to carry out the method for a cell switching as described in the embodiment of the sixth aspect of this disclosure.

According to a ninth aspect of the embodiments of this disclosure, there is provided a computer readable medium, including a computer readable program code, which will cause an apparatus for a cell switching or a terminal equipment to carry out the method for a cell switching as described in the embodiment of the sixth aspect of this disclosure.

According to a tenth aspect of the embodiments of this disclosure, there is provided a computer readable program code, which, when executed in an apparatus for a cell switching or a network node, will cause the apparatus for a cell switching or the network node to carry out the method for a cell switching as described in the embodiment of the seventh aspect of this disclosure.

According to an eleventh aspect of the embodiments of this disclosure, there is provided a computer readable medium, including a computer readable program code, which will cause an apparatus for a cell switching or a network node to carry out the method for a cell switching as described in the embodiment of the seventh aspect of this disclosure.

An advantage of the embodiments of this disclosure exists in that the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of the intra-gNB-DU mobility procedure within the gNB-CU;
FIG. 2 is a schematic diagram of the inter-gNB-CU mobility procedure;
FIG. 3 is a schematic diagram of an intra-AMF/UPF handover procedure;
FIG. 4 is schematic diagram of a communication system of an embodiment of this disclosure;
FIG. 5 is a schematic diagram of a deployment scenario of NG-RAN of an embodiment of this disclosure;
FIG. 6 is a schematic diagram of a deployment scenario of IAB of an embodiment of this disclosure;
FIG. 7 is a schematic diagram of the method for a cell switching of embodiment 1 of this disclosure;
FIG. 8 is a schematic diagram of a basic signaling procedure of L1 signaling and/or L2 signaling based cell switch of embodiment 1 of this disclosure;
FIG. 9 is a schematic diagram of the method for a cell switching of embodiment 2 of this disclosure;
FIG. 10 is a schematic diagram of the method for a cell switching of embodiment 3 of this disclosure;
FIG. 11 is a schematic diagram of the apparatus for a cell switching of embodiment 4 of this disclosure;
FIG. 12 is a schematic diagram of the apparatus for a cell switching of embodiment 5 of this disclosure;
FIG. 13 is a block diagram of a systematic structure of the terminal equipment of embodiment 6 of this disclosure; and
FIG. 14 is a block diagram of a systematic structure of the network node of embodiment 7 of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB-CU and one or more gNB-DUs, wherein the CU/DU is a logical node of the gNB having a part of functions of the gNB. And a term "cell" may refer to a base station and/or its coverage area, depending on a context of the term. One gNB-DU supports one or more cells, and one cell is supported by only one gNB-DU.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc., such as a terminal equipment served by an IAB-node or an IAB-donor under an IAB architecture.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, all of "when... ", "in a case where...", "for a case where..." and "if..." denote one or some conditions or states, and furthermore, all of these expressions are interchangeable.

Scenarios of the embodiments of this disclosure shall be described below by way of examples; however, this disclosure is not limited thereto.

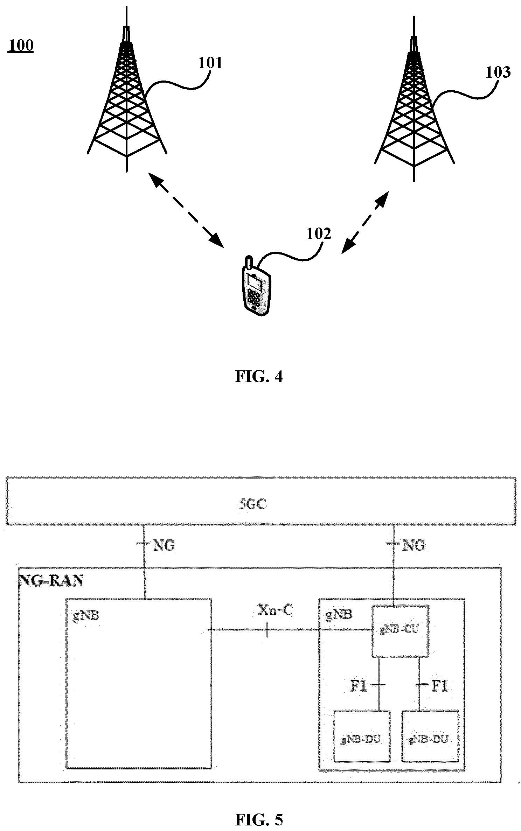

FIG. 4 is a schematic diagram of a communication system of an embodiment of this disclosure, in which a case where a terminal equipment and a network device are taken as examples is schematically shown. As shown in FIG. 4, the communication system 100 may include a first network node 101 and a terminal equipment 102. When the terminal equipment 102 performs cell change, the first network node 101 serves as a source network node, and at the same time, it serves as a target network node; or, as shown in FIG. 4, the communication system 100 may also include a second network node 103, in which case when the terminal equipment 102 performs cell change, the first network node 101 is a source network node, and the second network node 103 is a target network node.

For the sake of simplicity, an example having only one terminal equipment is schematically given in FIG. 4.

In the embodiments of this disclosure, for inter-gNB cell changes, i.e. inter-gNB-CU cell changes, the first network node 101 and the second network node 103 are, for example, NR gNBs.

For inter-gNB-DU cell changes, the first network node 101 and the second network node 103 are different gNB-DUs within the same gNB-CU.

For intra-gNB-DU cell changes, the first network node 101 and the second network node 103 are different TRPs or repeaters within the same gNB-DU; or, the first network node 101 is both a source network node and a target network node, and a source cell and a target cell are both located on the first network node 101, in which case the communication system 100 of the embodiment of this disclosure includes the first network node 101 and the terminal equipment 102.

In the embodiments of this disclosure, FIG. 4 represents an IAB network, in which the terminal equipment 102 may either be a UE or an IAB-MT.

For inter-IAB-donor-CU cell changes, the first network node 101 and the second network node 103 are different IAB-donor-CUs, that is, when the terminal equipment 102 needs to perform cell change, the first network node 101 is a source IAB-donor-CU, and the second network node 103 is a target IAB-donor-CU.

For inter-IAB-donor-DU cell changes within an IAB-donor-CU, the first network node 101 and the second network node 103 are different IAB-donor-DUs within the same IAB-donor-CU, that is, when the terminal equipment 102 needs to perform cell change, the first network node 101 is a source IAB-donor-DU, and the second network node 103 is a target IAB-donor-DU.

For inter-IAB-node cell changes, the communication system 100 of the embodiment of this disclosure includes a first network node 101 and a terminal equipment 102. When the terminal equipment 102 needs to perform cell change, the first network node 101 is a source IAB-donor-DU, and is also a target IAB-donor-DU.

In the embodiment of this disclosure, existing services or services that may be implemented in the future may be performed between the first network node 101 and the terminal equipment 102. For example, such services may include but not limited to an enhanced mobile broadband (eMBB), massive machine type communication (mMTC), and ultra-reliable and low-latency communication (URLLC), etc.

The methods for a cell switching in the embodiments of this disclosure may be applicable to various deployment scenarios, such as deployment scenarios of NG-RAN, and IAB, etc.

FIG. 5 is a schematic diagram of a deployment scenario of NG-RAN of an embodiment of this disclosure. As shown in FIG. 5, the NG-RAN includes a group of gNBs connected to a 5GC via an NG interface. The gNBs may be interconnected via an Xn interface. A gNB may include one gNB-CU and one or more gNB-DU(s), a gNB-CU and a gNB-DU are connected via an F1 interface, and one gNB-DU may only be connected to one gNB-CU.

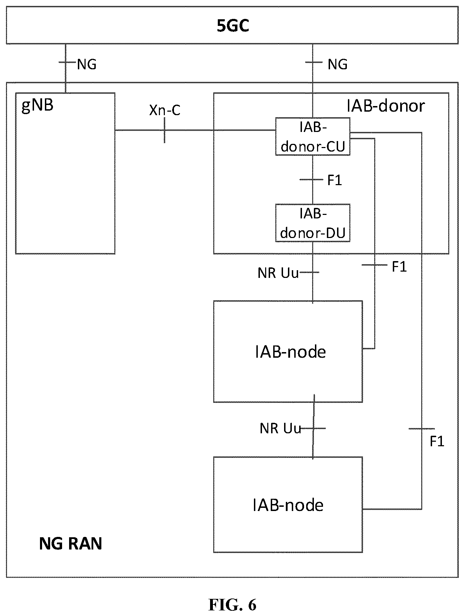

FIG. 6 is a schematic diagram of a deployment scenario of IAB of an embodiment of this disclosure. As shown in FIG. 6, the NG-RAN may be wirelessly connects to a gNB that is able to serve for IAB-nodes via the IAB nodes, referred to as an IAB-donor, to support IAB. The IAB-donor includes one IAB-donor-CU and one or more IAB-donor-DU(s).

Unless otherwise specified, all functions defined for a gNB-DU are equally applicable to an IAB-DU and a IAB-donor-DU, all functions defined for a gNB-CU are equally applicable to an IAB-donor-CU, and all functions defined for a UE are equally applicable to an IAB-MT.

Various implementations of the embodiments of this disclosure shall be described below with reference to the accompanying drawings. These implementations are illustrative only, and are not intended to limit this disclosure.

### Embodiment 1

The embodiment of this disclosure provides a method for a cell switching, applicable to a terminal equipment, such as the terminal equipment 102 in FIG. 4.

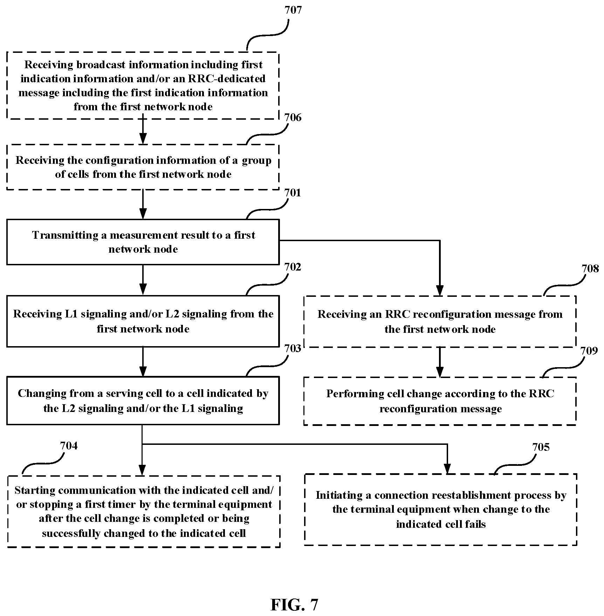

FIG. 7 is a schematic diagram of the method for a cell switching of embodiment 1 of this disclosure. As shown in FIG. 7, the method includes:
step 701: transmitting a measurement result to a first network node;
step 702: receiving L1 signaling and/or L2 signaling from the first network node; and
step 703: changing from a serving cell to a cell indicated by the L2 signaling and/or the L1 signaling.

Hence, the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

In the embodiments of this disclosure, the cell change (switch) includes at least one of serving cell change (switch), special cell change and primary cell change.

In the embodiments of this disclosure, the source cell and target cell in the cell change are synchronous or asynchronous.

In the embodiments of this disclosure, the source cell and target cell in the cell change are of intra-frequency or inter-frequency.

In the embodiments of this disclosure, the source cell and/or the target cell in the cell change operate(s) at FR1 or FR2.

In the embodiments of this disclosure, L1 refers to layer 1, including, for example, a physical layer;
L2 refers to layer 2, including, for example, an MAC layer or MAC sublayer, a PDCP layer or PDCP sublayer, and an RLC layer or RLC sublayer;
and L3 refers to layer 3, including, for example, an RRC layer.

In step 701, the transmitting a measurement result by the terminal equipment to a first network node includes at least one of reporting the measurement result via RRC signaling, reporting the measurement result via the L1 signaling and reporting the measurement result via an MAC CE.

In the embodiments of this disclosure, the reporting the measurement result via RRC signaling includes a measurement reporting procedure.

In the embodiments of this disclosure, the reporting the measurement result via the L1 signaling includes reporting a measurement result(s) of an SSB and/or a CSI-RS via the L1 signaling.

In the embodiments of this disclosure, the reporting the measurement result via the L1 signaling includes periodically reporting the measurement result and/or reporting the measurement result triggered by event(s).

In the embodiments of this disclosure, the reporting the measurement result via an MAC CE includes reporting available candidate beams via a BFR MAC CE triggered by a beam failure.

In the embodiments of this disclosure, the reporting the measurement result via an MAC CE includes: reporting at least one of an indication of available beams, a measurement result of beams, whether available beams exist and the number of available beams via an MAC CE.

In the embodiments of this disclosure, the MAC CE is different from the BFR MAC CE.

In the embodiments of this disclosure, the MAC CE is periodically triggered and/or triggered by event(s).

For example, the event includes: that MAC receives L1 indication(s) and/or receives L3 indication(s).

In step 702, the terminal equipment receives the L1 signaling and/or the L2 signaling from the first network node. In step 703, the terminal equipment changes from the current serving cell to the cell indicated by the L2 signaling and/or the L1 signaling.

For example, the terminal equipment receives the L1 signaling from the first network node, and changes from the current serving cell to the cell indicated by the L1 signaling;
for another example, the terminal equipment receives the L2 signaling from the first network node, and changes from the current serving cell to the cell indicated by the L2 signaling;
for a further example, the terminal equipment receives the L2 signaling and the L1 signaling from the first network node, the L2 signaling including multiple indicated cells, and the L1 signaling indicating one cell in the multiple cells, and the terminal equipment changes from the current serving cell to the cell indicated by the L1 signaling.

In the embodiments of this disclosure, the L1 signaling is downlink control information (DCI).

In the embodiments of this disclosure, the L2 signaling is an MAC CE.

In the embodiments of this disclosure, the L1 signaling indicates at least one of the following:
cell information;
a TCI state ID, e.g. the L1 signaling reuses DCI for existing TCI state ID indication or uses a updated DCI based on existing TCI state ID indication;
TA information;
a UE identifier assigned by the target cell for the terminal equipment, such as a C-RNTI;
HARQ feedback information of the L1 signaling; and
scheduling information, such as a UL grant and/or a DL assignment in the target cell.

In the embodiments of this disclosure, the L2 signaling indicates at least one of the following:
cell information;
TCI state identifier (TCI state ID), e.g. the L2 signaling reuses MAC CE for existing TCI state ID indication or uses a updated DCI based on existing TCI state ID indication;
TA information;
a UE identifier assigned by the target cell for the terminal equipment, such as a C-RNTI;
HARQ feedback information of the L2 signaling; and
scheduling information, such as including a UL grant and/or a DL assignment in the target cell.

For example, the terminal equipment receives the L2 signaling and the L1 signaling from the first network node, and changes from the current serving cell to the cell indicated by the L2 signaling and the L1 signaling, wherein the L2 signaling and the L1 signaling indicate different information of the same cell, for example, the L1 signaling indicate the TCI state ID of the cell, and the L2 signaling indicate the TA information of the cell.

In the embodiments of this disclosure, the changing from the serving cell to the cell indicated by the L2 signaling and/or the L1 signaling includes at least one of the following:
starting a first timer T1, the first timer T1 used to control a cell change procedure based on the L1 signaling and/or the L2 signaling;
applying configuration of the indicated cell;
initiating a random access procedure to the indicated cell;
considering the C-RNTI associated with the indicated cell as its C-RNTI;
receiving DL transmission on the cell according to the indicated scheduling information; and
transmitting information to the indicated cell or a network node to which the cell belongs, the network node to which the cell belongs being a second network node or a first network node.

In the embodiments of this disclosure, the C-RNTI may be previously configured by RRC signaling, for example, the terminal equipment receives the configuration information of a group of cells from the first network node, and the RRC signaling configuration refers to configuration in the configuration information to which the cell indicated by the L1 signaling and/or the L2 signaling correspond(s); or, the C-RNTI may also be included in the L1/L2 signaling.

If there is only one signaling indication, the C-RNTI is applied, and if there are multiple signaling indications, latter indications are applied, or the indications are applied in an order of L1, L2 and L3.

In the embodiments of this disclosure, when the terminal equipment applies the configuration of the indicated cell, the terminal equipment considers that the handover is completed or handover to the indicated cell is successful.

In the embodiments of this disclosure, the applying configuration of the indicated cell includes applying at least one of an SSB frequency, a TA value and physical layer configuration of the cell.

For example, the terminal equipment receives configuration information of a group of cells from the first network node, the configuration information referring to the configuration in the configuration information to which the cell indicated by the L1 signaling and/or the L2 signaling correspond(s).

In the embodiments of this disclosure, when the terminal equipment completes the random access procedure, the terminal equipment considers that the cell change is completed or changing to the indicated cell is successful.

In the embodiments of this disclosure, when the terminal equipment receives first DL transmission on the indicated cell, such as successfully receiving first DL transmission, it considers that the cell change is completed or changing to the indicated cell is successful.

In the embodiments of this disclosure, the indicated cell is a target cell, and the second network node is a target network node.

In the embodiments of this disclosure, the information transmitted by the terminal equipment to the cell or the second network node or the first network node indicates that the cell change is complete or that changing to the indicated cell is successful.

In the embodiments of this disclosure, the transmitting information to the indicated cell or the network node to which the cell belongs includes at least one of the following: carrying the information by an RRC reconfiguration complete message; indicating the information by feedback of the L1 signaling and/or the L2 signaling, the feedback being generated based on feedback information indicated by the L2 signaling and/or the L1 signaling; and indicating the information by scheduling information indicated by the L1 signaling and/or the L2 signaling.

In the embodiments of this disclosure, as shown in FIG. 7, the method further includes:
step 704: starting communication with the indicated cell and/or stopping a first timer by the terminal equipment after the cell change is completed or being successfully changed to the indicated cell.

For example, the communication that the terminal equipment starts to perform with the indicated cell includes: transceiving of a dedicated channel and/or signal of the terminal equipment, and/or transceiving of a non-dedicated channel and/or signal of the terminal equipment.

In the embodiments of this disclosure, as shown in FIG. 7, the method further includes:
step 705: initiating a connection reestablishment procedure by the terminal equipment when change to the indicated cell fails.

For example, it is deemed that change to the indicated cell fails when at least one of the following behaviors occurs:
the first timer expires;
the random access procedure initiated by the terminal equipment to the indicated cell fails or the number of times of failure reaches a predetermined number of times; and
the terminal equipment is unable to apply configuration or a part of configuration of the indicated cell.

In the embodiments of this disclosure, as shown in FIG. 7, the method further includes:
step 706: receiving the configuration information of a group of cells from the first network node, the group of cells being candidate cells for performing the cell change procedure based on the L1 signaling and/or the L2 signaling.

In the embodiments of this disclosure, the first network node implicitly indicates that it supports the cell change procedure based on the L1 signaling and/or the L2 signaling. For example, when the terminal equipment receives the configuration information of a group of cells, the terminal equipment considers that the first network node supports the cell change procedure based on the L1 signaling and/or the L2 signaling.

In the embodiments of this disclosure, the first network node also explicitly indicates that it supports the cell change procedure based on the L1 signaling and/or the L2 signaling, such as indicating via a broadcast message and/or an RRC-specific message.

In the embodiments of this disclosure, as shown in FIG. 7, the method further includes:
step 707: receiving broadcast information including first indication information and/or an RRC-dedicated message including the first indication information from the first network node.

In the embodiments of this disclosure, the first indication information indicates at least one of the following that:
the first network node or the cell transmitting the first indication information supports the cell change procedure based on the L1 signaling and/or the L2 signaling;
the first network node or the cell transmitting the first indication information does not support the cell change procedure based on the L1 signaling and/or the L2 signaling;
the first network node or the cell transmitting the first indication information only supports a cell change procedure based on L3 signaling; and
the first network node or the cell transmitting the first indication information supports the cell change procedure based on the L1 signaling and/or the L2 signaling and a cell change procedure based on the L3 signaling.

In the embodiments of this disclosure, as shown in FIG. 7, the method further includes:
step 708: receiving an RRC reconfiguration message from the first network node; and
step 709: performing cell change according to the RRC reconfiguration message.

In the embodiments of this disclosure, steps 704-709 are optional.

In the embodiments of this disclosure, steps 702 and 703 are executed when the cell change procedure based on L1/L2 signaling is used, and steps 708 and 709 are executed when the cell change procedure based RRC signaling is used.

In the embodiments of this disclosure, as described in step 706, the terminal equipment further receives the configuration information of a group of cells from the first network node.

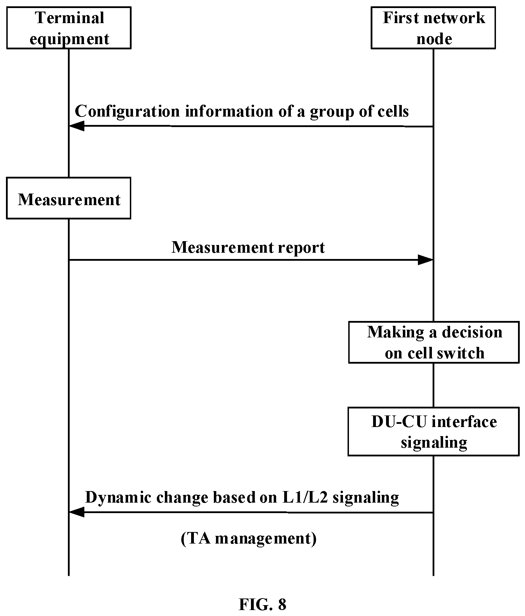

FIG. 8 is a schematic diagram of a basic signaling procedure of L1 signaling and/or L2 signaling based cell switch of embodiment 1 of this disclosure. As shown in FIG. 8, the basic signaling procedure includes: transmitting the configuration information of a group of cells by the first network node to the terminal equipment, i.e. configuring multiple candidate cells; performing measurement by the terminal equipment; transmitting the measurement report to the first network node; making a decision on switching by the first network node; generating CU-DU interface signaling; and performing dynamic switch via the L1/L2 signaling. Furthermore, TA (time alignment) management may be performed.

The method for a cell switching of the embodiment of this disclosure shall be exemplified below with reference to specific scenarios.

For inter-DU cell change, for example, the source cell and the target cell are two cells under the same gNB-DU (such as the first network node, and in the embodiment of this disclosure, for the inter-DU cell change, the first network node may also be referred to as a first network unit), and the gNB-DU is connected to the gNB-CU via an F1 interface. Data of terminal equipment are transmitted between the gNB-CU and the gNB-DU via a tunnel, identified by UL/DL GTP TEID. When inter-gNB-DU cell switch is performed, the gNB-CU provides a new UL GTP TEID for the gNB-DU, and the gNB-DU provides a new DL GTP TEID for the gNB-CU.

In the embodiments of this disclosure, when inter-gNB-DU cell switch based on the L1/L2 signaling is performed, the gNB-CU and the gNB-DU exchange new UL/DL GTP TEIDs. Such exchange may occur before the gNB-DU provides the configuration information of a group of cells to the terminal equipment, or after the gNB-DU receives the measurement result (after making decision on performing cell change), or after the gNB-DU receives (successful or positive) feedback from the terminal.

In the embodiments of this disclosure, a time for starting to use the new UL/DL GTP TEID is: successful completion of cell change; physical layer reconfiguration or resetting or partial resetting; MAC reconfiguration or resetting or partial resetting; RLC reconfiguration or reestablishment or partial reestablishment; PDCP reconfiguration or reestablishment or partial reestablishment; PDCP data recovery; or reception of an instruction (from the terminal or a core network) instructing to use the new UL/DL GTP TEID.

In the embodiments of this disclosure, before this, a previous UL/DL GTP TEID is used.

For inter-DU cell change within the gNB-CU, for example, the source cell is located in gNB-DU1 (e.g. the first network node or source network node or first network unit), and the target cell is located in gNB-DU2 (e.g. the second network node or target network node or second network unit), both gNB-DU1 and gNB-DU2 are connected to the gNB-CU via F1.

In the embodiments of this disclosure, the configuration information of a group of cells configured by the network (gNB-DU1) to the terminal is from a DU where the group of cells is located or from a CU to which DU1 is connected. This procedure may be requested by the source gNB-DU to the DU where the cells are located, or may be requested for the DU where the cells are located by a CU indicated by the source gNB-DU to connect.

In the embodiments of this disclosure, before transmitting L1/L2 signaling to instruct the terminal to perform cell change, the source gNB-DU may request the target gNB-DU via the gNB-CU for cell change based on L1/L2 signaling. For example, the source gNB-DU may transmit a UL RRC MESSAGE TRANSFER message to the gNB-CU, the message carrying measurement results (including L1/L2/L3 measurement results) and/or an indication, the indication indicating cell change based on L1/L2 signaling; the gNB-CU transmits a UE CONTEXT SETUP REQUEST message to the target gNB-DU, the message carrying all or a part of contents included in the UL RRC MESSAGE TRANSFER message; and the target gNB-DU makes a response with a UE CONTEXT SETUP RESPONSE message, including an indication indicating cell change based on the L1/L2 signaling and information indicated by the L1/L2 signaling (e.g. see the information of the L1/L2 signaling in the Summary of the Disclosure).

In the embodiments of this disclosure, after the terminal equipment transmits (forward or successful) feedback to the target gNB-DU, the gNB-DU transmits an F1 message to the gNB-CU, the message carrying the feedback. For example, a UL RRC MESSAGE TRANSFER message is used, or a new message, such as a UL MOBILITY FEEDBACK message, is used. After receiving the message, the gNB-CU transmits a message to the source gNB-DU to release the context of the terminal equipment, the message being, for example, UE NEXT RELEASE COMMAND.

It can be seen from the above embodiment that the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

### Embodiment 2

The embodiment of this disclosure provides a method for a cell switching, corresponding to the method for a cell switching of embodiment 1 applicable to a terminal equipment, and reference may be made to the disclosure contained in embodiment 1 for identical or corresponding contents.

This method is applicable to a first network node, such as the first network node 101 in FIG. 4.

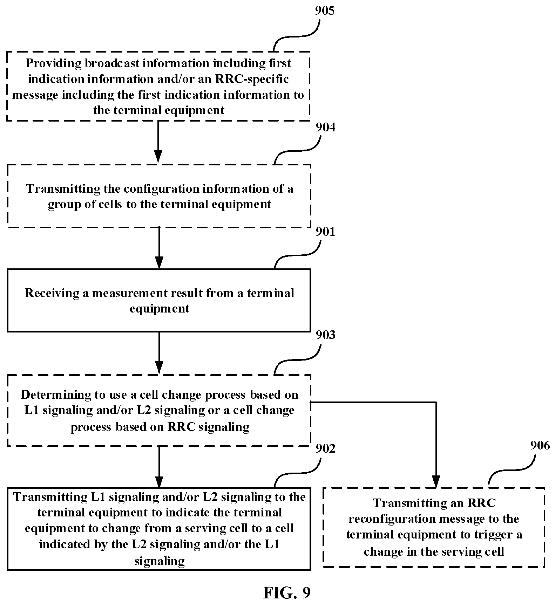

FIG. 9 is a schematic diagram of the method for a cell switching of embodiment 2 of this disclosure. As shown in FIG. 9, the method includes:
step 901: receiving a measurement result from a terminal equipment; and
step 902: transmitting L1 signaling and/or L2 signaling to the terminal equipment to indicate the terminal equipment to change from a serving cell to a cell indicated by the L2 signaling and/or the L1 signaling.

In the embodiments of this disclosure, the measurement result is reported via at least one of RRC signaling, L1 signaling and an MAC CE.

In the embodiments of this disclosure, the reporting the measurement result via RRC signaling includes a measurement reporting procedure.

In the embodiments of this disclosure, the reporting the measurement result via the L1 signaling includes reporting a measurement result(s) of an SSB and/or a CSI-RS via the L1 signaling.

In the embodiments of this disclosure, the reporting the measurement result via the L1 signaling includes periodically reporting the measurement result and/or reporting the measurement result triggered by event(s).

In the embodiments of this disclosure, the reporting the measurement result via an MAC CE includes reporting available candidate beams via a BFR MAC CE triggered by a beam failure.

In the embodiments of this disclosure, the reporting the measurement result via an MAC CE includes: reporting at least one of an indication of available beams, a measurement result of beams, whether available beams exist and the number of available beams via an MAC CE.

In the embodiments of this disclosure, the MAC CE is different from the BFR MAC CE.

In the embodiments of this disclosure, the MAC CE is periodically triggered and/or triggered by event(s).

For example, the event includes: an L1 indication and/or L3 indication(s).

In the embodiments of this disclosure, the L1 signaling is DCI, and/or, the L2 signaling is an MAC CE.

In the embodiments of this disclosure, the L1 signaling indicates at least one of the following:
cell information;
a TCI state ID, e.g. the L1 signaling reuses DCI for existing TCI state ID indication or uses a updated DCI based on existing TCI state ID indication;
TA information;
a UE identifier assigned by the target cell for the terminal equipment, such as a C-RNTI;
HARQ feedback information of L1 signaling; and
scheduling information, such as including a UL grant and/or a DL assignment in the target cell.

In the embodiments of this disclosure, the L2 signaling indicates at least one of the following:
cell information;
TCI state identifier (TCI state ID);
TA information;
a UE identifier assigned by the target cell for the terminal equipment, such as a C-RNTI;
HARQ feedback information of the L2 signaling; and
scheduling information, such as including a UL grant and/or a DL assignment in the target cell.

In the embodiments of this disclosure, as shown in FIG. 9, the method further includes:
step 903: determining by the first network node to use a cell change procedure based on L1 signaling and/or L2 signaling or a cell change procedure based on RRC signaling.

In the embodiments of this disclosure, the cell change procedure based on the L1 signaling and/or the L2 signaling includes: transmitting the L1 signaling and/or the L2 signaling by the first network node to the terminal equipment to trigger a change in the serving cell.

For example, in step 903, in the case where the first network node determines to use the cell change procedure based on the L1 signaling and/or the L2 signaling, step 902 is executed.

In the embodiments of this disclosure, the cell change procedure based on RRC signaling includes: transmitting an RRC reconfiguration message by the first network node to the terminal equipment to trigger a change in the serving cell.

For example, in step 903, in the case where the first network node determines to use the cell change procedure based on RRC signaling, step 906 below is executed.

In the embodiments of this disclosure, as shown in FIG. 9, the method further includes:
step 904: transmitting the configuration information of a group of cells to the terminal equipment.

In the embodiments of this disclosure, as shown in FIG. 9, the method further includes:
step 905: providing broadcast information including first indication information and/or an RRC-specific message including the first indication information to the terminal equipment.

The first indication information indicates at least one of the following:
that the first network node or a cell transmitting the first indication information supports a cell change procedure based on L1 signaling and/or L2 signaling;
that the first network node or a cell transmitting the first indication information does not support a cell change procedure based on L1 signaling and/or L2 signaling;
that the first network node or a cell transmitting the first indication information supports only a cell change procedure based on L3 signaling; or
that the first network node or a cell transmitting the first indication information supports a cell change procedure based on L1 signaling and/or L2 signaling and a cell change procedure based on the L3 signaling.

Wherein, the cell change procedure based on L3 signaling is, for example, a cell change procedure based on RRC signaling.

In the embodiments of this disclosure, the cell change procedure based on RRC signaling includes: transmitting an RRC reconfiguration message by the first network node to the terminal equipment to trigger a change in the serving cell.

In the embodiments of this disclosure, as shown in FIG. 9, the method further includes:
step 906: transmitting an RRC reconfiguration message to the terminal equipment to trigger a change in the serving cell.

That is, in step 903, in the case where the first network node determines to use the cell change procedure based on RRC signaling, step 906 is executed.

In the embodiments of this disclosure, steps 903, 904, 905 and 906 are optional, and an order of execution of step 904 and step 905 is not limited.

In the embodiments of this disclosure, in step 905, the indication may be transmitted via broadcasting or via an RRC-specific message.

In the embodiments of this disclosure, the RRC-specific message explicitly or implicitly indicates supporting the cell change procedure based on the L1 signaling and/or the L2 signaling.

In the embodiments of this disclosure, that the RRC-specific message explicitly or implicitly indicates supporting the cell change procedure based on the L1 signaling and/or the L2 signaling includes: when the configuration information of a group of cells is transmitted to the terminal equipment, deeming by the terminal equipment that the first network node supports the cell change procedure based on the L1 signaling and/or the L2 signaling.

That is, transmitting the configuration information of a group of cells by the first network node to the terminal equipment is equivalent to implicitly indicating supporting the cell change procedure based on the L1 signaling and/or the L2 signaling via the RRC-specific message. That is, in this case, step 904 and step 905 are the same step.

It can be seen from the above embodiment that the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

### Embodiment 3

The embodiment of this disclosure provides a method for a cell switching. This method corresponds to the method for a cell switching of embodiment 1 applicable to a terminal equipment and the method for a cell switching of embodiment 2 applicable to a first network node, with identical contents being not going to be described herein any further.

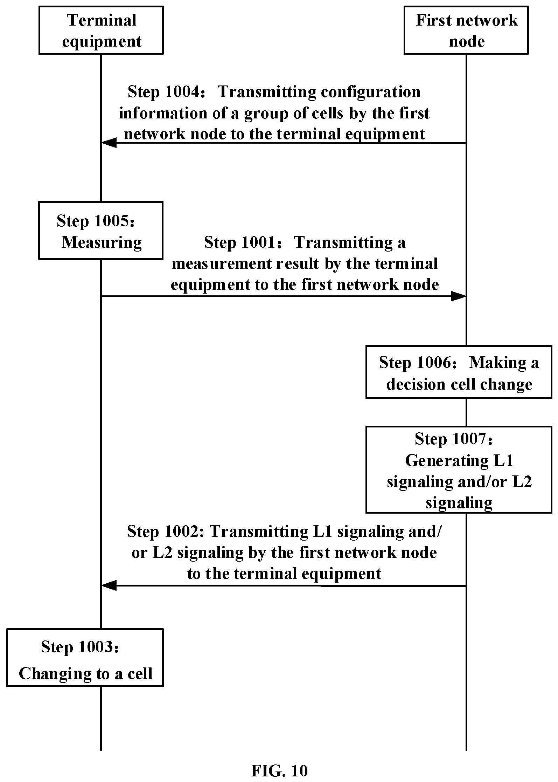

FIG. 10 is a schematic diagram of the method for a cell switching of embodiment 3 of this disclosure, applicable to a terminal equipment and a first network node. As shown in FIG. 10, the method includes:
step 1001: transmitting a measurement result by the terminal equipment to the first network node;
step 1002: transmitting L1 signaling and/or L2 signaling by the first network node to the terminal equipment; and
step 1003: changing by the terminal equipment from a serving cell to a cell indicated by the L2 signaling and/or the L1 signaling.

In the embodiments of this disclosure, as shown in FIG. 10, the method may further include:
step 1004: transmitting configuration information of a group of cells by the first network node to the terminal equipment;
step 1005: performing measurement by the terminal equipment;
step 1006: making a decision by the first network node on performing cell change based on L1 signaling and/or L2 signaling; and
step 1007: generating L1 signaling and/or L2 signaling by the first network node.

Steps 1004, 1005, 1006 and 1007 are optional.

In the embodiment of this disclosure, reference may be made to the disclosure contained in embodiment 1 and embodiment 2 for implementations of steps 1001-1007, which shall not be repeated herein any further.

It can be seen from the above embodiment that the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

### Embodiment 4

The embodiment of this disclosure provides an apparatus for a cell switching, applicable to a terminal equipment. As a principle of the apparatus for solving problems is similar to that of the method in embodiment 1, reference may be made to the implementation of the method described in embodiment 1 for implementation of the apparatus, with identical or related contents being not going to be described herein any further.

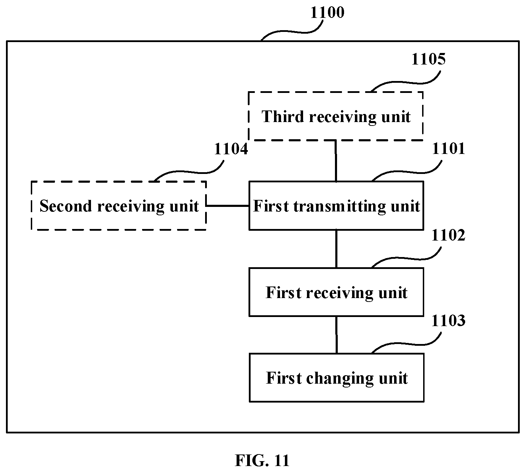

FIG. 11 is a schematic diagram of the apparatus for apparatus for a cell switching of embodiment 4 of this disclosure. As shown in FIG. 11, an apparatus 1100 includes:
a first transmitting unit 1101 configured to transmit a measurement result to a first network node;
a first receiving unit 1102 configured to receive L1 signaling and/or L2 signaling from the first network node; and
a first changing unit 1103 configured to change from a serving cell to a cell indicated by the L2 signaling and/or the L1 signaling.

In the embodiments of this disclosure, the first transmitting unit 1101 reports the measurement result via at least one of RRC signaling, L1 signaling and an MAC CE.

In the embodiments of this disclosure, the reporting the measurement result via RRC signaling includes a measurement reporting procedure.

In the embodiments of this disclosure, the reporting the measurement result via L1 signaling includes reporting a measurement result(s) of an SSB and/or a CSI-RS via the L1 signaling.

In the embodiments of this disclosure, the reporting the measurement result via L1 signaling includes periodically reporting the measurement result and/or reporting the measurement result triggered by event(s).

In the embodiments of this disclosure, the reporting the measurement result via an MAC CE includes reporting available candidate beams via a BFR MAC CE triggered by a beam failure.

In the embodiments of this disclosure, the reporting the measurement result via an MAC CE includes: reporting at least one of an indication of available beams, a measurement result of beams, whether available beams exist and the number of available beams via an MAC CE.

In the embodiments of this disclosure, the MAC CE is different from the BFR MAC CE.

In the embodiments of this disclosure, the MAC CE is periodically triggered and/or triggered by event(s).

In the embodiments of this disclosure, the event includes: an L1 indication and/or L3 indication(s).

In the embodiments of this disclosure, the L1 signaling is DCI, and/or, the L2 signaling is an MAC CE.

In the embodiments of this disclosure, L1 signaling indicates at least one of the following:
cell information;
a TCI state ID, e.g. the L1 signaling reuses DCI for existing TCI state ID indication or uses a updated DCI based on existing TCI state ID indication;
TA information;
a UE identifier assigned by the target cell for the terminal equipment, such as a C-RNTI;
HARQ feedback information of the L1 signaling; and
scheduling information, such as including a UL grant and/or a DL assignment in the target cell.

In the embodiments of this disclosure, the L2 signaling indicates at least one of the following:
cell information;
TCI state identifier (TCI state ID), e.g. the L2 signaling reuses MAC CE for existing TCI state ID indication or uses a updated DCI based on existing TCI state ID indication;
TA information;
a UE identifier assigned by the target cell for the terminal equipment, such as a C-RNTI;
HARQ feedback information of the L2 signaling; and
scheduling information, such as including a UL grant and/or a DL assignment in the target cell.

In the embodiments of this disclosure, the first changing unit 1103 executes at least one of the following:
starting a first timer T1, the first timer T1 being used to control a cell change procedure based on the L1 signaling and/or the L2 signaling;
applying configuration of the indicated cell;
initiating a random access procedure to the indicated cell;
considering the C-RNTI associated with the indicated cell as its C-RNTI;
receiving DL transmission on the cell according to the indicated scheduling information; and
transmitting information to the indicated cell or a network node to which the cell belongs, the network node to which the cell belongs being a second network node or a first network node.

In the embodiments of this disclosure, when the terminal equipment receives first DL transmission on the indicated cell, the terminal equipment considers that the cell change is completed or changing to the indicated cell is successful.

In the embodiments of this disclosure, when the terminal equipment applies the configuration of the indicated cell, the terminal equipment considers that the cell change is completed or changing to the indicated cell is successful.

In the embodiments of this disclosure, the applying configuration of the indicated cell includes applying at least one of an SSB frequency, a TA value and physical layer configuration of the cell.

In the embodiments of this disclosure, when the terminal equipment completes the random access procedure, the terminal equipment considers that the cell change is completed or changing to the indicated cell is successful.

In the embodiments of this disclosure, the information transmitted by the terminal equipment to the cell or the network node to which the cell belongs indicates that the cell change is complete or that changing to the indicated cell is successful.

In the embodiments of this disclosure, the transmitting information to the cell or the network node to which the cell belongs includes at least one of the following:
carrying the information by an RRC reconfiguration complete message;
indicating the information by feedback of the L1 signaling and/or the L2 signaling; and
indicating the information by scheduling information indicated by the L1 signaling and/or the L2 signaling.

In the embodiments of this disclosure, after the cell change is completed or being successfully changed to the indicated cell, the terminal equipment starts to perform communication with the indicated cell and/or stop a first timer.

In the embodiments of this disclosure, the communication that the terminal equipment starts to perform with the indicated cell includes: transceiving of a dedicated channel and/or signal of the terminal equipment, and/or transceiving of a non-dedicated channel and/or signal of the terminal equipment.

In the embodiments of this disclosure, when change to the indicated cell fails, the terminal equipment initiates a connection reestablishment process.

In the embodiments of this disclosure, it is deemed that change to the indicated cell fails when at least one of the following behaviors occurs:
the first timer expires;
the random access procedure initiated by the terminal equipment to the indicated cell fails or the number of times of failure reaches a predetermined number of times; and
the terminal equipment is unable to apply configuration or a part of configuration of the indicated cell.

In the embodiments of this disclosure, the apparatus further includes:
a second receiving unit 1104 configured to receive the configuration information of a group of cells from the first network node.

In the embodiments of this disclosure, when the terminal equipment receives the configuration information of a group of cells, the terminal equipment considers that the first network node supports the cell change procedure based on the L1 signaling and/or the L2 signaling.

In the embodiments of this disclosure, the apparatus further includes:
a third receiving unit 1105 configured to receive broadcast information including first indication information and/or an RRC-specific message including the first indication information from the first network node.

In the embodiments of this disclosure, the first indication information indicates at least one of the following that:
the first network node or the cell transmitting the first indication information supports the cell change procedure based on L1 signaling and/or L2 signaling;
the first network node or the cell transmitting the first indication information does not support the cell change procedure based on L1 signaling and/or L2 signaling;
the first network node or the cell transmitting the first indication information only supports a cell change procedure based on L3 signaling; and
the first network node or the cell transmitting the first indication information supports the cell change procedure based on L1 signaling and/or L2 signaling and a cell change procedure based on L3 signaling.

It can be seen from the above embodiment that the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

### Embodiment 5

The embodiment of this disclosure provides an apparatus for a cell switching, applicable to a first network node. As a principle of the apparatus for solving problems is similar to that of the method in embodiment 2, reference may be made to the implementation of the method described in embodiment 2 for implementation of the apparatus, with identical or related contents being not going to be described herein any further.

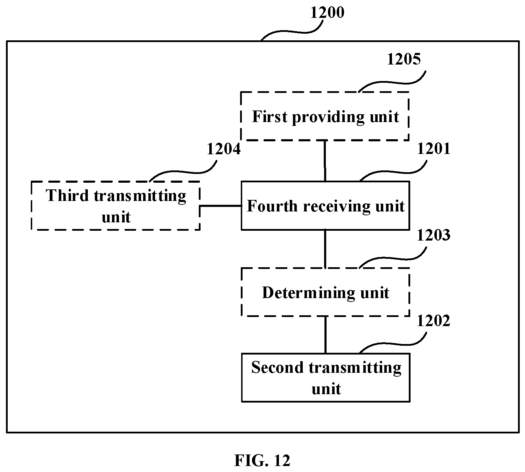

FIG. 12 is a schematic diagram of the apparatus for apparatus for a cell switching of embodiment 5 of this disclosure. As shown in FIG. 12, an apparatus 1200 includes:
a fourth receiving unit 1201 configured to receive a measurement result from a terminal equipment; and
a second transmitting unit 1202 configured to transmit L1 signaling and/or L2 signaling to the terminal equipment to indicate the terminal equipment to change from a serving cell to a cell indicated by the L2 signaling and/or the L1 signaling.

In the embodiments of this disclosure, the measurement result is reported via at least one of RRC signaling, L1 signaling and an MAC CE.

In the embodiments of this disclosure, the reporting the measurement result via RRC signaling includes a measurement reporting procedure.

In the embodiments of this disclosure, the reporting the measurement result via L1 signaling includes reporting a measurement result(s) of an SSB and/or a CSI-RS via the L1 signaling.

In the embodiments of this disclosure, the reporting the measurement result via L1 signaling includes periodically reporting the measurement result and/or reporting the measurement result triggered by event(s).

In the embodiments of this disclosure, the reporting the measurement result via an MAC CE includes reporting available candidate beams via a BFR MAC CE triggered by a beam failure.

In the embodiments of this disclosure, the reporting the measurement result via an MAC CE includes: reporting at least one of an indication of available beams, a measurement result of beams, whether available beams exist and the number of available beams via an MAC CE.

In the embodiments of this disclosure, the MAC CE is different from the BFR MAC CE.

In the embodiments of this disclosure, the MAC CE is periodically triggered and/or triggered by event(s).

For example, the event includes: an L1 indication and/or L3 indication(s).

In the embodiments of this disclosure, the L1 signaling is DCI, and/or, the L2 signaling is an MAC CE.

In the embodiments of this disclosure, the L1 signaling indicates at least one of the following:
cell information;
a TCI state ID, e.g. the L1 signaling reuses DCI for existing TCI state ID indication or uses a updated DCI based on existing TCI state ID indication;
TA information;
a UE identifier assigned by the target cell for the terminal equipment, such as a C-RNTI;
HARQ feedback information of the L1 signaling; and
scheduling information, such as including a UL grant and/or a DL assignment in the target cell.

In the embodiments of this disclosure, the L2 signaling indicates at least one of the following:
cell information;
TCI state identifier (TCI state ID);
TA information;
a UE identifier assigned by the target cell for the terminal equipment, such as a C-RNTI;
HARQ feedback information of the L2 signaling; and
scheduling information, such as including a UL grant and/or a DL assignment in the target cell.

In the embodiments of this disclosure, the apparatus further includes:
a determining unit 1203 configured to use a cell change procedure based on L1 signaling and/or L2 signaling or a cell change procedure based on RRC signaling.

In the embodiments of this disclosure, the cell change procedure based on the L1 signaling and/or the L2 signaling includes: transmitting the L1 signaling and/or the L2 signaling by the first network node to the terminal equipment to trigger a change in the serving cell, and/or
the cell change procedure based on RRC signaling includes: transmitting an RRC reconfiguration message by the first network node to the terminal equipment to trigger a change in the serving cell.

In the embodiments of this disclosure, the apparatus further includes:
a third transmitting unit 1204 configured to transmit the configuration information of a group of cells to the terminal equipment.

In the embodiments of this disclosure, the apparatus further includes:
a first providing unit 1205 configured to provide broadcast information including first indication information and/or an RRC-specific message including the first indication information to the terminal equipment.

In the embodiments of this disclosure, the first indication information indicates at least one of the following:
that the first network node or a cell transmitting the first indication information supports a cell change procedure based on L1 signaling and/or L2 signaling;
that the first network node or a cell transmitting the first indication information does not support a cell change procedure based on L1 signaling and/or L2 signaling;
that the first network node or a cell transmitting the first indication information supports only a cell change procedure based on L3 signaling; or
that the first network node or a cell transmitting the first indication information supports a cell change procedure based on L1 signaling and/or L2 signaling and a cell change procedure based on the L3 signaling.

Wherein, the cell change procedure based on L3 signaling is, for example, a cell change procedure based on RRC signaling.

In the embodiments of this disclosure, the RRC-specific message explicitly or implicitly indicates supporting the cell change procedure based on the L1 signaling and/or the L2 signaling.

In the embodiments of this disclosure, that the RRC-specific message explicitly or implicitly indicates supporting the cell change procedure based on the L1 signaling and/or the L2 signaling includes:
when the configuration information of a group of cells is transmitted to the terminal equipment, deeming by the terminal equipment that the first network node supports the cell change procedure based on the L1 signaling and/or the L2 signaling.

It can be seen from the above embodiment that the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

### Embodiment 6

The embodiment of this disclosure provides a terminal equipment, including the apparatus for a cell switching as described in embodiment 4.

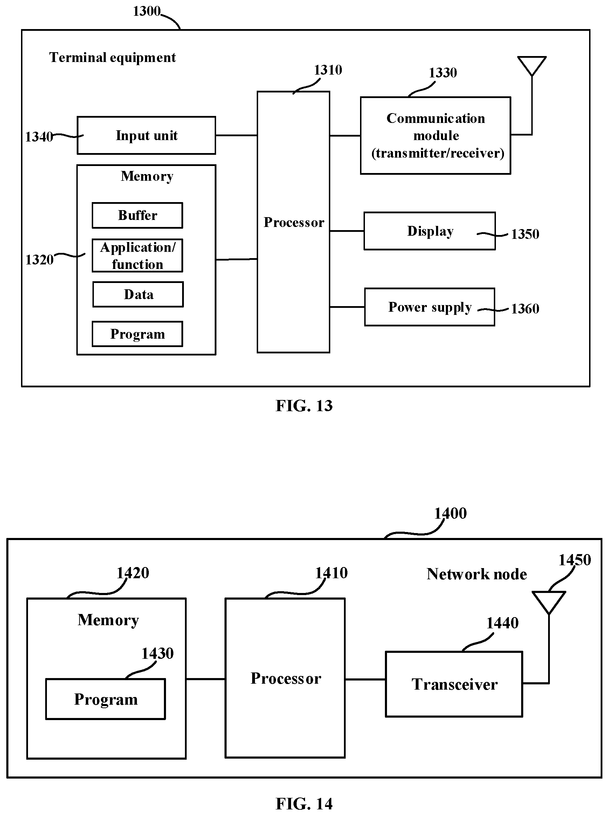

FIG. 13 is a block diagram of a systematic structure of the terminal equipment of embodiment 6 of this disclosure. As shown in FIG. 13, a terminal equipment 1300 may include a processor 1310 and a memory 1320, the memory 1320 storing data and a program and being coupled to the processor 1310. It should be noted that this figure is illustrative only, and other types of structures may also be used, so as to supplement or replace this structure and achieve a telecommunications function or other functions.

In one implementation, the functions of the apparatus for a cell switching may be integrated into the processor 1310.

In the embodiments of this disclosure, the processor 1310 may be configured to: transmit a measurement result to a first network node; receive L1 signaling and/or L2 signaling from the first network node; and change from a serving cell to a cell indicated by the L2 signaling and/or the L1 signaling.

In another implementation, the apparatus for a cell switching and the processor 1310 may be configured separately; for example, the apparatus for a cell switching may be configured as a chip connected to the processor 1310, and the functions of the apparatus for a cell switching are executed under control of the processor 1310.

As shown in FIG. 13, the terminal equipment 1300 may further include a communication module 1330, an input unit 1340, a display 1350, and a power supply 1360. It should be noted that the terminal equipment 1300 does not necessarily include all the parts shown in FIG. 13, and the above components are not necessary. Furthermore, the terminal equipment 1300 may include parts not shown in FIG. 13, and the related art may be referred to.

As shown in FIG. 13, the processor 1310 is sometimes referred to as a controller or an operational control, which may include a microprocessor or other processor devices and/or logic devices. The processor 1310 receives input and controls operations of components of the terminal equipment 1300.

The memory 1320 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1310 may execute programs stored in the memory 1320, so as to realize information storage or processing, etc. Functions of other parts are similar to those of the related art, which shall not be described herein any further. The parts of the terminal equipment 1300 may be realized by specific hardware, firmware, software, or any combination thereof, without departing from the scope of this disclosure.

It can be seen from the above embodiment that the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

### Embodiment 7

The embodiment of this disclosure provides a network node, including the apparatus for a cell switching as described in embodiment 5.

FIG. 14 is a block diagram of a systematic structure of the network node of embodiment 7 of this disclosure. As shown in FIG. 14, a network node 1400 may include a processor 1410 and a memory 1420, the memory 1420 being coupled to the processor 1410. Wherein, the memory 1420 may store various data, and furthermore, it may store a program 1430 for information processing, and execute the program 1430 under control of the processor 1410, so as to receive various information transmitted by a terminal equipment, and transmit various information to the terminal equipment.

In one implementation, the functions of the apparatus for a cell switching may be integrated into the processor 1410.

In the embodiments of this disclosure, the processor 1410 may be configured to: receive a measurement result from a terminal equipment; and transmit L1 signaling and/or L2 signaling to the terminal equipment to indicate the terminal equipment to change from a serving cell to a cell indicated by the L2 signaling and/or the L1 signaling.

In another implementation, the apparatus for a cell switching and the processor 1410 may be configured separately; for example, the apparatus for a cell switching may be configured as a chip connected to the processor 1410, and the functions of the apparatus for a cell switching are executed under control of the processor 1410.

Furthermore, as shown in FIG. 14, the network node 1400 may include a transceiver 1440, and an antenna 1450, etc. Wherein, functions of the above components are similar to those in the related art, and shall not be described herein any further. It should be noted that the network node 1400 does not necessarily include all the parts shown in FIG. 14, and furthermore, the network node 1400 may include parts not shown in FIG. 14, and the related art may be referred to.

It can be seen from the above embodiment that the terminal equipment switches the serving cell to a cell indicated by L2 signaling and/or L1 signaling according to the received L1 signaling and/or the received L2 signaling from a source network node after transmitting the measurement result(s) to the source network node, thereby providing an effective mechanism realizing a procedure of L1/L2 based cell switch, and lowing latency, signaling overhead and interruption time.

### Embodiment 8

The embodiment of this disclosure provides a communication system, including the terminal equipment described in embodiment 6 and/or the network node described in embodiment 7, and reference may be made to the disclosure contained in embodiment 6 and embodiment 7 for details.

For example, reference may be made to FIG. 4 for a structure of the communication system. As shown in FIG. 4, the communication system 100 includes the first network node 101 and the terminal equipment 102. The terminal equipment 102 may be identical to the terminal equipment described in embodiment 6, and/or, the first network node 101 may be identical to the first network node described in embodiment 7, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 11 may either correspond to software modules of procedures of a computer program, or correspond to hardware modules. Such software modules may respectively correspond to the steps shown in FIG. 7. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 11 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 11 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

### Supplement I

1. An apparatus for a cell switching, provided in a terminal equipment, the apparatus including:
   a first transmitting unit configured to transmit a measurement result to a first network node;
   a first receiving unit configured to receive L1 signaling and/or L2 signaling from the first network node; and
   a first changing unit configured to change from a serving cell to a cell indicated by the L2 signaling and/or the L1 signaling.
2. The apparatus according to supplement 1, wherein,
   the first transmitting unit reports the measurement result via at least one of RRC signaling, L1 signaling and an MAC CE.
3. The apparatus according to supplement 2, wherein,
   the reporting the measurement result via RRC signaling includes a measurement reporting procedure.
4. The apparatus according to supplement 2, wherein,
   the reporting the measurement result via L1 signaling includes reporting a measurement result(s) of an SSB and/or a CSI-RS via L1 signaling.
5. The apparatus according to supplement 2 or 4, wherein,
   the reporting the measurement result via L1 signaling includes periodically reporting the measurement result and/or reporting the measurement result triggered by event(s).
6. The apparatus according to supplement 2, wherein,
   the reporting the measurement result via an MAC CE includes reporting available candidate beams via a BFR MAC CE triggered by a beam failure.
7. The apparatus according to supplement 2, wherein,
   the reporting the measurement result via an MAC CE includes: reporting at least one of an indication of available beams, a measurement result of beams, whether available beams exist and the number of available beams via an MAC CE.
8. The apparatus according to supplement 2 or 7, wherein,
   the MAC CE is different from the BFR MAC CE.
9. The apparatus according to supplement 2 or 7 or 8, wherein,
   the MAC CE is periodically triggered and/or triggered by event(s).
10. The apparatus according to supplement 9, wherein,
   the event includes: an L1 indication and/or L3 indication(s).
11. The apparatus according to supplement 1, wherein,
   the L1 signaling is DCI, and/or, the L2 signaling is an MAC CE.
12. The apparatus according to supplement 1 or 11, wherein the L1 signaling indicates at least one of the following:
   cell information;
   a TCI state ID;
   TA information;
   a UE identifier assigned by the target cell for the terminal equipment;
   HARQ feedback information of the L1 signaling; and
   scheduling information.
13. The apparatus according to supplement 1 or 11, wherein the L2 signaling indicates at least one of the following:
   cell information;
   TCI state identifier (TCI state ID);
   TA information;
   a UE identifier assigned by the target cell for the terminal equipment;
   HARQ feedback information of the L2 signaling; and
   scheduling information.
14. The apparatus according to supplement 1, wherein the first changing unit executes at least one of the following:
   starting a first timer, the first timer being used to control a cell change procedure based on the L1 signaling and/or the L2 signaling;
   applying configuration of the indicated cell;
   initiating a random access procedure to the indicated cell;
   considering the C-RNTI associated with the indicated cell as its C-RNTI;
   receiving DL transmission on the cell according to the indicated scheduling information; and
   transmitting information to the indicated cell or a network node to which the cell belongs, the network node to which the cell belongs being a second network node or a first network node.
   14a. The apparatus according to supplement 14, wherein,
   when the terminal equipment receives first DL transmission on the indicated cell, the terminal equipment considers that the cell change is completed or changing to the indicated cell is successful.
15. The apparatus according to supplement 14, wherein,
   when the terminal equipment applies the configuration of the indicated cell, the terminal equipment considers that the cell change is completed or changing to the indicated cell is successful.
16. The apparatus according to supplement 14 or 15, wherein the applying configuration of the indicated cell includes:
   applying at least one of an SSB frequency, a TA value and physical layer configuration of the cell.
17. The apparatus according to supplement 14, wherein,
   when the terminal equipment completes the random access procedure, the terminal equipment considers that the cell change is completed or changing to the indicated cell is successful.
18. The apparatus according to supplement 14, wherein,
   the information transmitted by the terminal equipment to the cell or the network node to which the cell belongs indicates that the cell change is complete or that changing to the indicated cell is successful.
19. The apparatus according to supplement 14 or 18, wherein the transmitting information to the indicated cell or the network node to which the cell belongs includes at least one of the following:
   carrying the information by an RRC reconfiguration complete message;
   indicating the information by feedback of the L1 signaling and/or the L2 signaling; and
   indicating the information by scheduling information indicated by the L1 signaling and/or the L2 signaling.
20. The apparatus according to any one of supplements 1 and 14-19, wherein,
   after the cell change is completed or being successfully changed to the indicated cell, the terminal equipment starts to perform communication with the indicated cell and/or stop a first timer.
21. The apparatus according to supplement 20, wherein,
   the communication that the terminal equipment starts to perform with the indicated cell includes: transceiving of a dedicated channel and/or signal of the terminal equipment, and/or transceiving of a non-dedicated channel and/or signal of the terminal equipment.
22. The apparatus according to supplement 1 or 14, wherein,
   when change to the indicated cell fails, the terminal equipment initiates a connection reestablishment process.
23. The apparatus according to supplement 22, wherein it is deemed that change to the indicated cell fails when at least one of the following behaviors occurs:
   the first timer expires;
   the random access procedure initiated by the terminal equipment to the indicated cell fails or the number of times of failure reaches a predetermined number of times; and
   the terminal equipment is unable to apply configuration or a part of configuration of the indicated cell.
24. The apparatus according to any one of supplements 1-23, wherein the apparatus further includes:
   a second receiving unit configured to receive the configuration information of a group of cells from the first network node.
25. The apparatus according to supplement 1 or 24, wherein,
   when the terminal equipment receives the configuration information of a group of cells, the terminal equipment considers that the first network node supports the cell change procedure based on the L1 signaling and/or the L2 signaling.
26. The apparatus according to supplement 1 or 24 or 25, wherein the apparatus further includes:
   a third receiving unit configured to receive broadcast information including first indication information and/or an RRC-specific message including the first indication information from the first network node.
27. The apparatus according to supplement 26, wherein the first indication information indicates at least one of the following that:
   the first network node or the cell transmitting the first indication information supports the cell change procedure based on L1 signaling and/or L2 signaling;
   the first network node or the cell transmitting the first indication information does not support the cell change procedure based on L1 signaling and/or L2 signaling;
   the first network node or the cell transmitting the first indication information only supports a cell change procedure based on L3 signaling; and
   the first network node or the cell transmitting the first indication information supports the cell change procedure based on L1 signaling and/or L2 signaling and a cell change procedure based on L3 signaling.
28. An apparatus for a cell switching, applicable to a first network node, the apparatus including:
   a fourth receiving unit configured to receive a measurement result from a terminal equipment; and
   a second transmitting unit configured to transmit L1 signaling and/or L2 signaling to the terminal equipment to indicate the terminal equipment to change from a serving cell to a cell indicated by the L2 signaling and/or the L1 signaling.
29. The apparatus according to supplement 28, wherein,
   the measurement result is reported via at least one of RRC signaling, L1 signaling and an MAC CE.
30. The apparatus according to supplement 29, wherein,
   the reporting the measurement result via RRC signaling includes a measurement reporting procedure.
31. The apparatus according to supplement 29, wherein,
   the reporting the measurement result via L1 signaling includes reporting a measurement result(s) of an SSB and/or a CSI-RS via the L1 signaling.
32. The apparatus according to supplement 29 or 31, wherein,
   the reporting the measurement result via L1 signaling includes periodically reporting the measurement result and/or reporting the measurement result triggered by event(s).
33. The apparatus according to supplement 29, wherein,
   the reporting the measurement result via an MAC CE includes reporting available candidate beams via a BFR MAC CE triggered by a beam failure.
34. The apparatus according to supplement 29, wherein,
   the reporting the measurement result via an MAC CE includes: reporting at least one of an indication of available beams, a measurement result of beams, whether available beams exist and the number of available beams via an MAC CE.
35. The apparatus according to supplement 29 or 34, wherein,
   the MAC CE is different from the BFR MAC CE.
36. The apparatus according to supplement 29 or 34 or 35, wherein,
   the MAC CE is periodically triggered and/or triggered by event(s).
37. The apparatus according to supplement 36, wherein,
   the event includes: an L1 indication and/or L3 indication(s).
38. The apparatus according to supplement 28, wherein,
   the L1 signaling is DCI, and/or, the L2 signaling is an MAC CE.
39. The apparatus according to supplement 28 or 38, wherein the L1 signaling indicates at least one of the following:
   cell information;
   a TCI state ID;
   TA information;
   a UE identifier assigned by the target cell for the terminal equipment, such as a C-RNTI;
   HARQ feedback information of the L1 signaling; and
   scheduling information.
40. The apparatus according to supplement 28 or 38, wherein the L2 signaling indicates at least one of the following:
   cell information;
   TCI state identifier (TCI state ID);
   TA information;
   a UE identifier assigned by the target cell for the terminal equipment, such as a C-RNTI;
   HARQ feedback information of the L2 signaling; and
   scheduling information.
41. The apparatus according to supplement 28, wherein the apparatus further includes:
   a determining unit configured to use a cell change procedure based on L1 signaling and/or L2 signaling or a cell change procedure based on RRC signaling.
42. The apparatus according to supplement 41, wherein,
   the cell change procedure based on the L1 signaling and/or the L2 signaling includes: transmitting the L1 signaling and/or the L2 signaling by the first network node to the terminal equipment to trigger a change in the serving cell, and/or
   the cell change procedure based on RRC signaling includes: transmitting an RRC reconfiguration message by the first network node to the terminal equipment to trigger a change in the serving cell.
43. The apparatus according to supplement 28, wherein the apparatus further includes:
   a third transmitting unit configured to transmit the configuration information of a group of cells to the terminal equipment.
44. The apparatus according to supplement 28 or 43, wherein the apparatus further includes:
   a first providing unit configured to provide broadcast information including first indication information and/or an RRC-specific message including the first indication information to the terminal equipment.
45. The apparatus according to supplement 44, wherein the first indication information indicates at least one of the following:
   that the first network node or a cell transmitting the first indication information supports a cell change procedure based on L1 signaling and/or L2 signaling;
   that the first network node or a cell transmitting the first indication information does not support a cell change procedure based on L1 signaling and/or L2 signaling;
   that the first network node or a cell transmitting the first indication information supports only a cell change procedure based on L3 signaling; or
   that the first network node or a cell transmitting the first indication information supports a cell change procedure based on L1 signaling and/or L2 signaling and a cell change procedure based on the L3 signaling.
46. The apparatus according to supplement 44, wherein the RRC-specific message explicitly or implicitly indicates supporting the cell change procedure based on the L1 signaling and/or the L2 signaling.
47. The apparatus according to supplement 46, wherein that the RRC-specific message explicitly or implicitly indicates supporting the cell change procedure based on the L1 signaling and/or the L2 signaling includes:
   when the configuration information of a group of cells is transmitted to the terminal equipment, deeming by the terminal equipment that the first network node supports the cell change procedure based on the L1 signaling and/or the L2 signaling.
48. A terminal equipment, including the apparatus as described in any of supplements 1-27.
49. A network node, including the apparatus as described in any one of supplements 28-47.
50. A communication system, including the terminal equipment as described in supplement 48 and/or the network node as described in supplement 49.

### Supplement II

1. A method for a cell switching, applicable to a terminal equipment, the method including:
   transmitting a measurement result to a first network node;
   receiving L1 signaling and/or L2 signaling from the first network node; and
   changing from a serving cell to a cell indicated by the L2 signaling and/or the L1 signaling.
2. The method according to supplement 1, wherein the transmitting a measurement result to a first network node includes:
   reporting the measurement result via at least one of RRC signaling, L1 signaling and an MAC CE.
3. The method according to supplement 2, wherein,
   the reporting the measurement result via RRC signaling includes a measurement reporting procedure.
4. The method according to supplement 2, wherein,
   the reporting the measurement result via L1 signaling includes reporting a measurement result(s) of an SSB and/or a CSI-RS via the L1 signaling.
5. The method according to supplement 2 or 4, wherein,
   the reporting the measurement result via L1 signaling includes periodically reporting the measurement result and/or reporting the measurement result triggered by event(s).
6. The method according to supplement 2, wherein,
   the reporting the measurement result via an MAC CE includes reporting available candidate beams via a BFR MAC CE triggered by a beam failure.
7. The method according to supplement 2, wherein,
   the reporting the measurement result via an MAC CE includes: reporting at least one of an indication of available beams, a measurement result of beams, whether available beams exist and the number of available beams via an MAC CE.
8. The method according to supplement 2 or 7, wherein,
   the MAC CE is different from the BFR MAC CE.
9. The method according to supplement 2 or 7 or 8, wherein,
   the MAC CE is periodically triggered and/or triggered by event(s).
10. The method according to supplement 9, wherein,
   the event includes: an L1 indication and/or L3 indication(s).
11. The method according to supplement 1, wherein,
   the L1 signaling is DCI, and/or, the L2 signaling is an MAC CE.
12. The method according to supplement 1 or 11, wherein the L1 signaling indicates at least one of the following:
   cell information;
   a TCI state ID;
   TA information;
   a UE identifier assigned by the target cell for the terminal equipment
   HARQ feedback information of the L1 signaling; and
   scheduling information.
13. The method according to supplement 1 or 11, wherein the L2 signaling indicates at least one of the following:
   cell information;
   TCI state identifier (TCI state ID);
   TA information;
   a UE identifier assigned by the target cell for the terminal equipment;
   HARQ feedback information of the L2 signaling; and
   scheduling information.
14. The method according to supplement 1, wherein the changing from a serving cell to a cell indicated by the L2 signaling and/or the L1 signaling includes at least one of the following:
   starting a first timer, the first timer being used to control a cell change procedure based on the L1 signaling and/or the L2 signaling;
   applying configuration of the indicated cell;
   initiating a random access procedure to the indicated cell;
   considering the C-RNTI associated with the indicated cell as its C-RNTI;
   receiving DL transmission on the cell according to the indicated scheduling information; and
   transmitting information to the indicated cell or a network node to which the cell belongs, the network node to which the cell belongs being a second network node or a first network node.
14a. The method according to supplement 14, wherein,
   when the terminal equipment receives first DL transmission on the indicated cell, the terminal equipment considers that the cell change is completed or changing to the indicated cell is successful.
15. The method according to supplement 14, wherein,
   when the terminal equipment applies the configuration of the indicated cell, the terminal equipment considers that the cell change is completed or changing to the indicated cell is successful.
16. The method according to supplement 14 or 15, wherein the applying configuration of the indicated cell includes:
   applying at least one of an SSB frequency, a TA value and physical layer configuration of the cell.
17. The method according to supplement 14, wherein,
   when the terminal equipment completes the random access procedure, the terminal equipment considers that the cell change is completed or changing to the indicated cell is successful.
18. The method according to supplement 14, wherein,
   the information transmitted by the terminal equipment to the cell or the network node to which the cell belongs indicates that the cell change is complete or that changing to the indicated cell is successful.
19. The method according to supplement 14 or 18, wherein the transmitting information to the indicated cell or the network node to which the cell belongs includes at least one of the following:
   carrying the information by an RRC reconfiguration complete message;
   indicating the information by feedback of the L1 signaling and/or the L2 signaling; and
   indicating the information by scheduling information indicated by the L1 signaling and/or the L2 signaling.
20. The method according to any one of supplements 1 and 14-19, wherein the method further includes:
   after the cell change is completed or being successfully changed to the indicated cell, starting to perform communication with the indicated cell and/or stopping a first timer by the terminal equipment.
21. The method according to supplement 20, wherein,
   the communication that the terminal equipment starts to perform with the indicated cell includes: transceiving of a dedicated channel and/or signal of the terminal equipment, and/or transceiving of a non-dedicated channel and/or signal of the terminal equipment.
22. The method according to supplement 1 or 14, wherein the method further includes:
   when change to the indicated cell fails, initiating a connection reestablishment procedure by the terminal equipment.
23. The method according to supplement 22, wherein it is deemed that change to the indicated cell fails when at least one of the following behaviors occurs:
   the first timer expires;
   the random access procedure initiated by the terminal equipment to the indicated cell fails or the number of times of failure reaches a predetermined number of times; and
   the terminal equipment is unable to apply configuration or a part of configuration of the indicated cell.
24. The method according to any one of supplements 1-23, wherein the method further includes:
   receiving the configuration information of a group of cells from the first network node.
25. The method according to supplement 1 or 24, wherein,
   when the terminal equipment receives the configuration information of a group of cells, the terminal equipment considers that the first network node supports the cell change procedure based on the L1 signaling and/or the L2 signaling.
26. The method according to supplement 1 or 24 or 25, wherein the method further includes:
   receiving broadcast information including first indication information and/or an RRC-specific message including the first indication information from the first network node.
27. The method according to supplement 26, wherein the first indication information indicates at least one of the following that:
   the first network node or the cell transmitting the first indication information supports the cell change procedure based on L1 signaling and/or L2 signaling;
   the first network node or the cell transmitting the first indication information does not support the cell change procedure based on L1 signaling and/or L2 signaling;
   the first network node or the cell transmitting the first indication information only supports a cell change procedure based on L3 signaling; and
   the first network node or the cell transmitting the first indication information supports the cell change procedure based on L1 signaling and/or L2 signaling and a cell change procedure based on L3 signaling.
28. A method for a cell switching, applicable to a first network node, the method including:
   receiving a measurement result from a terminal equipment; and
   transmitting L1 signaling and/or L2 signaling to the terminal equipment to indicate the terminal equipment to change from a serving cell to a cell indicated by the L2 signaling and/or the L1 signaling.
29. The method according to supplement 28, wherein,
   the measurement result is reported via at least one of RRC signaling, L1 signaling and an MAC CE.
30. The method according to supplement 29, wherein,
   the reporting the measurement result via RRC signaling includes a measurement reporting procedure.
31. The method according to supplement 29, wherein,
   the reporting the measurement result via L1 signaling includes reporting a measurement result(s) of an SSB and/or a CSI-RS via the L1 signaling.
32. The method according to supplement 29 or 31, wherein,
   the reporting the measurement result via L1 signaling includes periodically reporting the measurement result and/or reporting the measurement result triggered by event(s).
33. The method according to supplement 29, wherein,
   the reporting the measurement result via an MAC CE includes reporting available candidate beams via a BFR MAC CE triggered by a beam failure.
34. The method according to supplement 29, wherein,
   the reporting the measurement result via an MAC CE includes: reporting at least one of an indication of available beams, a measurement result of beams, whether available beams exist and the number of available beams via an MAC CE.
35. The method according to supplement 29 or 34, wherein,
   the MAC CE is different from the BFR MAC CE.
36. The method according to supplement 29 or 34 or 35, wherein,
   the MAC CE is periodically triggered and/or triggered by event(s).
37. The method according to supplement 36, wherein,
   the event includes: an L1 indication and/or L3 indication(s).
38. The method according to supplement 28, wherein,
   L1 signaling is DCI, and/or, L2 signaling is an MAC CE.
39. The method according to supplement 28 or 38, wherein the L1 signaling indicates at least one of the following:
   cell information;
   a TCI state ID, e.g. the L1 signaling reuses DCI for existing TCI state ID indication or uses a updated DCI based on existing TCI state ID indication;
   TA information;
   a UE identifier assigned by the target cell for the terminal equipment;
   HARQ feedback information of the L1 signaling; and
   scheduling information.
40. The method according to supplement 28 or 38, wherein the L2 signaling indicates at least one of the following:
   cell information;
   TCI state identifier (TCI state ID);
   TA information;
   a UE identifier assigned by the target cell for the terminal equipment;
   HARQ feedback information of L2 signaling; and
   scheduling information.
41. The method according to supplement 28, wherein the method further includes:
   determining by the first network node to use a cell change procedure based on L1 signaling and/or L2 signaling or a cell change procedure based on RRC signaling.
42. The method according to supplement 41, wherein,
   the cell change procedure based on the L1 signaling and/or the L2 signaling includes: transmitting the L1 signaling and/or the L2 signaling by the first network node to the terminal equipment to trigger a change in the serving cell, and/or
   the cell change procedure based on RRC signaling includes: transmitting an RRC reconfiguration message by the first network node to the terminal equipment to trigger a change in the serving cell.
43. The method according to supplement 28, wherein the method further includes:
   transmitting the configuration information of a group of cells to the terminal equipment.
44. The method according to supplement 28 or 43, wherein the method further includes:
   providing broadcast information including first indication information and/or an RRC-specific message including the first indication information to the terminal equipment.
45. The method according to supplement 44, wherein the first indication information indicates at least one of the following:
   that the first network node or a cell transmitting the first indication information supports a cell change procedure based on L1 signaling and/or L2 signaling;
   that the first network node or a cell transmitting the first indication information does not support a cell change procedure based on L1 signaling and/or L2 signaling;
   that the first network node or a cell transmitting the first indication information supports only a cell change procedure based on L3 signaling; or
   that the first network node or a cell transmitting the first indication information supports a cell change procedure based on L1 signaling and/or L2 signaling and a cell change procedure based on the L3 signaling.
46. The method according to supplement 44, wherein,
   the RRC-specific message explicitly or implicitly indicates supporting the cell change procedure based on the L1 signaling and/or the L2 signaling.
47. The method according to supplement 46, wherein that the RRC-specific message explicitly or implicitly indicates supporting the cell change procedure based on the **L1** signaling and/or the L2 signaling includes:
   when the configuration information of a group of cells is transmitted to the terminal equipment, deeming by the terminal equipment that the first network node supports the cell change procedure based on the **L1** signaling and/or the L2 signaling.

## Claims

1. A cell switch apparatus, provided in a terminal equipment, the apparatus comprising:
a first transmitting unit configured to transmit measurement result(s) to a first network node;
a first receiving unit configured to receive L1 signaling and/or L2 signaling from the first network node; and
a first switching unit configured to switch a serving cell to a cell indicated by the L2 signaling and/or the L1 signaling.

2. The apparatus according to claim 1, wherein,
the first transmitting unit reports the measurement result(s) via at least one of RRC signaling, L1 signaling and a MAC CE.

3. The apparatus according to claim 2, wherein,
the reporting the measurement result(s) via the L1 signaling comprises: periodic measurement result(s) reporting and/or event-triggering based measurement result(s) reporting.

4. The apparatus according to claim 2, wherein,
the reporting the measurement result(s) via a MAC CE comprises: reporting an available candidate beam via a BFR MAC CE triggered by a beam failure.

5. The apparatus according to claim 2, wherein,
the reporting the measurement result(s) via a MAC CE comprises: reporting at least one of an indication of an available beam, beam measurement result, whether there exists an available beam and the number of available beams via an MAC CE.

6. The apparatus according to claim 1, wherein the L1 signaling and/or the L2 signaling indicate(s) at least one of the following:
cell information;
TCI state ID(s);
TA information;
an UE identifier allocated by a target cell to the terminal equipment;
HARQ feedback information of the L1 signaling and/or the L2 signaling; or
scheduling information.

7. The apparatus according to claim 1, wherein the first switching unit performs at least one of the following:
starting a first timer for controlling a cell switch procedure based on the L1 signaling and/or the L2 signaling;
applying configuration of an indicated cell;
initiating a random access procedure to the indicated cell;
considering that a C-RNTI associated with the indicated cell is a C-RNTI of its own;
receiving DL transmission in the cell according to indicated scheduling information; or
transmitting information to the indicated cell or a network node to which the cell belongs.

8. The apparatus according to claim 7, wherein,
when the terminal equipment receives first DL transmission in the indicated cell, the terminal equipment considers that a cell switch is completed or being successfully switched to the indicated cell.

9. The apparatus according to claim 7, wherein,
when the terminal equipment applies the configuration of the indicated cell, the terminal equipment considers that a cell switch is completed or being successfully switched to the indicated cell.

10. The apparatus according to claim 7, wherein,
when the terminal equipment completes a random access procedure, the terminal equipment considers that a cell switch is completed or being successfully switched to the indicated cell.

11. The apparatus according to claim 7, wherein the information transmitted by the terminal equipment to the cell or the network node to which the cell belongs indicates that a cell switch is completed or that the cell is successfully switched to the indicated cell.

12. The apparatus according to claim 7, wherein the transmitting information to the indicated cell or a network node to which the cell belongs comprises at least one of the following:
carrying the information by an RRC reconfiguration complete message;
indicating the information by feedback of the L1 signaling and/or the L2 signaling; or
indicating the information by scheduling information indicated by the L1 signaling and/or the L2 signaling.

13. The apparatus according to claim 1, wherein,
after the cell switch is completed or being successfully switched to the indicated cell, the terminal equipment starts to perform communication with the indicated cell and/or stops a first timer.

14. The apparatus according to claim 13, wherein,
the communication that the terminal equipment starts to perform with the indicated cell comprises: transceiving of a specified channel and/or signal of the terminal equipment, and/or transceiving of a non-specified channel and/or signal of the terminal equipment.

15. The apparatus according to claim 1, wherein,
when the terminal equipment receives configuration information of a group of cells, the terminal equipment determines that the first network node supports a cell switch procedure based on the L1 signaling and/or the L2 signaling.

16. The apparatus according to claim 1, wherein the apparatus further comprises:
a third receiving unit configured to receive broadcast information comprising first indication information and/or an RRC specified message comprising the first indication information from the first network node.

17. A cell switch apparatus, applicable to a first network node, the apparatus comprising:
a fourth receiving unit configured to receive measurement result(s) from a terminal equipment; and
a second transmitting unit configured to transmit L1 signaling and/or L2 signaling to the terminal equipment to indicate the terminal equipment to switch a serving cell to a cell indicated by the L2 signaling and/or the L1 signaling.

18. The apparatus according to claim 17, wherein the L1 signaling and/or the L2 signaling indicate(s) at least one of the following:
cell information;
TCI state ID(s);
TA information;
an UE identifier allocated by a target cell to the terminal equipment;
HARQ feedback information of the L1 signaling and/or the L2 signaling; or
scheduling information.

19. The apparatus according to claim 17, wherein the apparatus further comprises:
a first providing unit configured to provide broadcast information comprising first indication information and/or an RRC specified message comprising the first indication information to the terminal equipment.

20. The apparatus according to claim 19, wherein the first indication information indicates at least one of the following:
that the first network node or a cell transmitting the first indication information supports a cell change procedure based on L1 signaling and/or L2 signaling;
that the first network node or a cell transmitting the first indication information does not support a cell change procedure based on L1 signaling and/or L2 signaling;
that the first network node or a cell transmitting the first indication information supports only a cell change procedure based on L3 signaling; or
that the first network node or a cell transmitting the first indication information supports a cell change procedure based on L1 signaling and/or L2 signaling and a cell change procedure based on the L3 signaling.
